# EUROPEAN PATENT APPLICATION

(11) **EP 3 895 538 A1**
(43) Date of publication of application: **20.10.2021**
(21) Application number: 21151995.4
(22) Date of filing: 07.11.2017
(51) Int. Cl.: A01N 43/30, A01P 1/00, A01P 3/00, C09D 197/00, C09D 105/06, C08L 97/00, C08L 5/06, A01N 3/00, A01N 43/36, C09D 5/14

(54) **COATING COMPOSITIONS AND METHODS OF USE THEREOF**

(30) Priority: 07.11.2016 US 201662418767 P
(62) Divisional of application: 17867626.8
(71) Applicant: Polynatural Holding SpA, Santiago, RM 7510548 (CL)
(72) Inventor: VERGARA SALINAS, José, Rodrigo, RM 7510548 Santiago (CL); PALMA GAVILAN, Francisco Javier, RM 7510548 Santiago (CL)
(74) Representative: Mewburn Ellis LLP

(57) **Abstract**

Aspects of the disclosure provide coating compositions and methods of use thereof.

## Description

### CROSS-REFERENCE TO RELATED APPLICATION

This application claims the benefit of the filing date of U.S. Provisional Application No. 62/418,767, entitled "COATING COMPOSITIONS AND METHODS OF USE THEREOF," filed November 7, 2016, the contents of which are incorporated herein by reference in its entirety.

### FIELD OF THE DISCLOSURE

The disclosure relates to coating compositions and methods of use thereof.

### BACKGROUND OF THE DISCLOSURE

Post-harvest fruits and vegetables experience deterioration due to dehydration, microbiological contamination, and naturally occurring ripening. The flavor, appearance, and nutritional value of post-harvest fruits and vegetables gradually deteriorates until rotting. In particular, post-harvest fruits and vegetables are susceptible to deterioration during transportation to destination markets. Despite conventional methods, which include sanitizer, fungicides, semisynthetic coatings, used to minimize deterioration, about 20-50% of post-harvest fruits and vegetables regularly go to waste. In addition, the conventional methods currently in use are increasingly being questioned in terms of food safety and environmental impact. Even organic food production does not guarantee products without synthetic food additives.

### SUMMARY OF THE DISCLOSURE

Provided herein are coating compositions useful for preserving food products, plants and other substances. In some embodiments, coatings provided herein are advantageous because they include edible components, *e.g.,* of plant origin *(e.g.,* vegetables, fruits). In some embodiments, coating components include byproducts and/or products of the agroindustry. In some embodiments, coatings provided herein are advantageous because they are adaptable to coating the surface of any food products, plants or other substances. In some embodiments, coatings provided herein are advantageous because the extent of gas or vapor transfer through the surface on which they are coated is controllable through formula modification of the coating. Thus, in some embodiments, components of a coating can be formulated to control the extent of hydration retention over time (e.g., during shipping) of a food product, plant and other substance to be coated. In some embodiments, coatings provided herein are advantageous because they include new biopolymers and bioactive compounds with antioxidant and antimicrobial (*e.g*., antifungal) activity. In some embodiments, it is an object of the present disclosure to provide coatings comprising a blend of effective amounts of components derived from agricultural. In some embodiments, it is an object of the present disclosure to provide coatings comprising a blend of effective amounts of hydrophilic and hydrophobic components derived from agricultural byproducts and products through formation of lipid-in-water emulsions or dispersions formation.

In some embodiments, provided herein is an edible, natural, organic, water-washable, and adaptable to different plant surfaces, coating which extends the shelf life of fruits and vegetables and other substances through decreasing dehydration and gas transfer, inhibition of microbial growth and improvement and/or maintenance of their organoleptic characteristics (*e.g*., brightness and firmness). In some embodiments, coatings provided herein are formulated with compounds of vegetable origin exclusively (byproducts and/or products of agroindustry) already present in greater or lesser extent in fruits and vegetables and may be classified as organic. In some embodiments, coatings provided herein comprise a blend of effective amounts of pectin (*e.g.,* pectin from fruit peels); nanocellulose, and nano-ligno-cellulose from woody plants (*e.g*., woody plants from cellulose industry); vegetable protein (*e.g.,* soy proteins, corn zein, wheat gluten, seaweed proteins); vegetable lipids (*e.g.,* sunflower oil, cottonseed oil, soybean oil, canola oil, palm oil, corn oil, carnauba wax, candelilla wax and ouricury wax); lignin obtained by an organosolv method (*e.g*., lignin from wheat straw); saponins and their derivatives (*e.g*., saponins from quinoa) ; and/or natural extracts from the plant, fruit or other substance to be coated.

Accordingly, one aspect of the present disclosure features a coating composition comprising pectin, one or more constituents of a vegetable lipid (*e.g*., soybean oil), lignin, and, saponin. In some embodiments, the coating composition further comprises nanocellulose, nano-ligno-cellulose, vegetable protein (*e.g*., soybean protein), and/or natural fruit extract. In some embodiments, the coating composition further comprises at least one fungicide (*e.g.*, fludioxonil). In some embodiments, the coating composition further comprises at least one fungicide. Appropriate fungicides, in some embodiments, may be obtained from commercial sources. For examples, in some embodiments, an appropriate fungicide may be SCHOLAR® 230SC Fungicide (Syngenta Canada, Inc., Ontario, Canada).

A fungicide may be added to a coating composition at any time. In some embodiments, the fungicide is added to the coating composition during its production. In some embodiments, the fungicide is added to the coating composition following its production. In some embodiments, the fungicide is added to the coating composition prior to its application.

In another aspect, the present disclosure provides a method of producing the coating composition comprising homogenizing in water one or more constituents of a vegetable lipid, a lignin, and a saponin with high temperature and high pressure to form a homogenized aqueous mixture (*e.g*., emulsion or dispersion), and dissolving pectin into the homogenized mixture having low temperature to form the coating composition. In some embodiments, the method of producing the coating composition further comprises homogenizing nano-lingo-cellulose. In some embodiments, the method of producing the coating composition further comprises dispersing or dissolving at least one or more components selected from nanocellulose, vegetable protein, or natural fruit extract.

In another aspect, the present disclosure provides a composition comprising a surface coated with the coating composition described here. In some embodiments, the surface comprises the surface of a fruit. In some embodiments, the surface comprises the surface of a plant.

In yet another aspect, the present disclosure provides a method for use comprising the coating composition. In some embodiments, a method for preserving a food product comprises coating the food product with an effective amount of the coating composition to preserve the food product. In some embodiments, a method for preserving a plant or component thereof comprises applying the coating composition to the outer surface of the plant or component thereof in an effective amount to preserve the plant or component thereof.

In some embodiments, a method for transporting a food product over a period of time from a first location to a second location comprises transporting a food product coated with the coating composition over a period of time from a first location to a second location, wherein the coating composition preserves the food product over the period of time.

In some embodiments, a method for preserving a food product comprises (a) evaluating surface hydrophobicity of a food product, (b) selecting a coating composition for preserving a food product based on (a), and (c) coating the food product with the coating composition.

The details of one or more embodiments of the invention are set forth in the description below. Other features or advantages of the present invention will be apparent from the following drawings and detailed description of several embodiments, and also from the appended claims.

### BRIEF DESCRIPTION OF DRAWINGS

FIG. 1A shows a graph of weight loss in nectarines treated in a processing plant with a commercial wax coating (Decco Lustr® 255) and with a coating composition disclosed herein. Evaluations were performed after 14, 28 and 32 days at cold storage (0°C). Bars represent the upper and lower limits of the 95% confidence interval.
FIG.1B shows a graph of weight loss in plums untreated and treated with a coating composition disclosed herein. Evaluations were performed after 3, 5, 7, and 10 days at room temperature (20 °C) storage. Bars represent the upper and lower limits of the 95% confidence interval.
FIG. 1C shows a graph of weight loss in avocados untreated and treated with a coating composition disclosed herein. Evaluations were performed after 4, 6, 8 and 12 days at room temperature (20 °C) storage. Bars represent the upper and lower limits of the 95% confidence interval.
FIG. 1D shows a graph of weight loss in apples untreated and treated with a coating composition disclosed herein. Evaluations were performed after 17, 10, 15 and 17 days at room temperature (20 °C) storage. Bars represent the upper and lower limits of the 95% confidence interval.
FIG. 2A shows a graph of rot incidence in nectarines treated with a commercial wax coating (positive control, Decco Lustr® 255) and with a coating composition disclosed herein. Both coatings were applied together with Scholar® fungicide in a processing plant. Evaluations were performed after 32 days at cold storage (0°C). Bars represent the upper and lower limits of the 95% confidence interval.
FIG. 2B shows a graph of peel microbial contamination incidence in avocado cv. "Hass" untreated (control) and treated with a coating composition disclosed herein. Evaluations were performed after 10 days at room temperature (20 °C). Bars represent the upper and lower limits of the 95% confidence interval.
FIG. 2C shows a graph of peel microbial contamination severity in avocado cv. "Hass" after 10 days at room temperature (20°C) for untreated fruits (control) and fruits coated with a coating composition disclosed herein. Severity were evaluated using the following rating: 1 = clear fruit; 2 = 0-25%; 3 = 25-50%; 4 = 50-75% and 5 = 75-100% damaged/contaminated surface area. Bars represent the upper and lower limits of the 95% confidence interval.
FIG. 2D shows a graph of anthracnose incidence in pulp avocado fruits cv. "Hass" untreated (control) and treated with a coating composition disclosed herein. Evaluations were performed after 10 days at room temperature (20°C). Bars represent the upper and lower limits of the 95% confidence interval.
FIG. 2E shows a graph of anthracnose severity in avocado cv. "Hass" after 10 days at room temperature (20°C) for untreated fruits (control) and fruits coated with a coating composition disclosed herein. Severity was evaluated using the following rating: 1 = clear fruit; 2 = slight; 3 = moderate; 4 = one severe spot point; and 5 = ≥ two severe spot points. Bars represent the upper and lower limits of the 95% confidence interval.
FIG. 2F shows a graph of stem end rot incidence in avocado fruits cv. "Hass" untreated (control) and treated with a coating composition disclosed herein. Evaluations performed after 10 days at room temperature (20°C). Bars represent the upper and lower limits of the 95% confidence interval.
FIG. 2G shows a graph of stem end rot in avocado cv. "Hass" after 10 days at room temperature (20°C) for untreated (control) and treated with a coating composition disclosed herein. Severity was evaluated using the following rating: 1 = clear fruit; 2 = slight; 3 = moderate; 4 = severe; and 5 = severe with mycelium presence. Bars represent the upper and lower limits of the 95% confidence interval.
FIG. 3A shows a graph of mycelial growth of the fungus *Botrytis cinerea* strain B05.10 at 48 hours of incubation at different hydrolyzed saponin extract concentrations: 20, 40, 80 and 160 ppm. Each bar represents the average of at least three independent experiments ± standard deviation. (*) Represents significant differences evaluated with a two-way analysis of variance (Tukey's test; at p ≤ 0.05).
FIG. 3B shows exemplary images of *Botrytis cinerea* strain B05.10 in absence (a, control) and presence of hydrolyzed saponin extract of quinoa (b, 160 ppm) at 48 hours of incubation.
FIG. 4A shows exemplary images of peel color and appearance in avocado cv. "Hass" for untreated (control) and treated with a coating composition disclosed herein. Treated fruits showed brighter and clear appearance compared to control fruits.
FIG. 4B shows exemplary images of cuticular wax and appearance in plum cv. "Angeleno" after 10 days for untreated (control) and treated with a coating composition disclosed herein. Treated fruits retained cuticular wax and did not have altered appearance compared to control fruits.
FIG. 4C shows a graph of cuticular wax retained in fresh plum cv. "Angeleno" after 10 days at room temperature (20°C) for untreated (control) and treated with a coating composition disclosed herein. Bars represent the upper and lower limits of the 95% confidence interval.
FIG. 4D shows exemplary images of the appearance of apple cv. "Fuji" after 17 days for untreated (control) and treated with a coating composition disclosed herein. The appearance of treated fruits was not altered compared to control fruits.
FIG. 5A shows exemplary images of avocado cv. "Hass" after 12 days at room temperature (20°C) for untreated (control) and treated with a coating composition disclosed herein (coated). Images show no alteration in natural ripening in coated avocados.
FIG. 5B shows a graph of peel color change in avocado cv. "Hass" after 12 days at room temperature (20°C) for untreated (control) and treated with a coating composition disclosed herein (coated). Ripening expression was evaluated using the following peel color change rating: 1 = green; 2 = 0-25%; 3 = 25-50%; 4 = 50-75% and 5 = 75 -100% black. Bars represent the upper and lower limits of the 95% confidence interval.

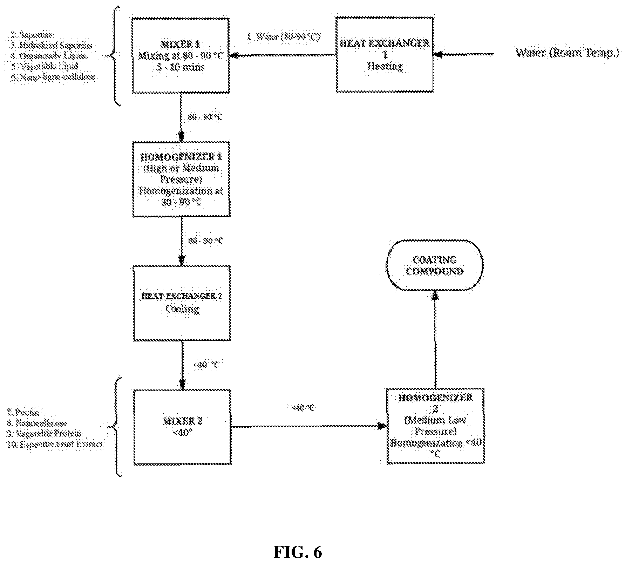

FIG. 6 is an exemplary preparation work-flow for a coating composition disclosed herein.
FIG. 7 is a flow chart showing an exemplary extraction of saponins from quinoa and hydrolysis process.
FIG. 8 shows a schematic depiction of an exemplary coating of a food product with a coating composition disclosed herein.
FIG. 9A is a flow chart showing an exemplary pretreatment of an organosolv lignin.
FIG. 9B shows an exemplary structure of a lignin.

### DETAILED DESCRIPTION OF CERTAIN EMBODIMENTS OF THE DISCLOSURE

Post-harvest fruits and vegetables often suffer deterioration due to dehydration, microbiological contamination and natural occurring ripening during transportation to destination markets. In post-harvest fruits and vegetables, the flavor, appearance and nutritional value may deteriorate gradually until rotten. Despite the methods currently used to minimize this deterioration, in some ACP countries, where tropical weather and poorly developed infrastructure contribute to the problem, wastage can regularly be as high as 40-50%. These methods include washing, conventional refrigeration, to use of functional packaging, modified atmosphere storage, fungicide treatment, wax coatings and recently ripening inhibitors as 1-methylcyclopropene (1-MCP). The use of 1-MCP inhibits ripening as an inhibitor of ethylene action. However, its action may not be effective in all kinds of fruits (e.g., tomato and bananas), rendering 1-MCP treatment ineffective, in some cases. Additionally, in some cases, 1-MCP treatment duration ranges from 12 to 24 h, which could result in a production day loss. Fungicides and wax coatings have been questioned because of possible harmful effects of some of its components, such as polyethylene in case of petroleum-derivative wax coatings.

Furthermore, coatings and films for postharvest fruit and vegetables made from natural products have been developed and are of increasing scientific and commercial interest. However, most (if not 100%) of these developments, require one or more of certain types of synthetic compounds (*e.g*., chemical fungicides) or compounds form non-vegetable origin (*e.g*., gelatin and chitosan) or compounds from animal origin to achieve acceptable performance requirements, opposing the current consumer trends towards more healthy, safe, natural and low intervention products such as (*e.g*., vegetarian, vegan, organic trends). Edible coatings are based on polysaccharides, proteins, lipids and their mixes and act as barriers and carriers of functional ingredients (antimicrobials, texture enhancers, nutraceuticals, antibrowning agents, colorants, flavors, nutrients and spices) on fresh fruits and vegetables to maximize their quality and shelf life.

The use of many water soluble polysaccharides and their mixes for formation of edible coatings and films has been considered. Coatings may be made from alginates and carrageenans (linear sulphated polysaccharides that are extracted from red edible seaweeds) and polymers may be used as main component of edible coatings. Chitin and chitosan films and coatings may be used to extend shelf life of fruit and vegetable despite its animal origin. Starch and its derivatives are others compounds used to produce biodegradable films and coatings. However, starch alone does not form films with adequate mechanical properties (high percentage of elongation, tensile, and flexural strength). Therefore, a treatment by either plasticizer, blending with other materials, genetic or chemical modification or combinations of the above approaches is useful for producing a successful film in this context. Several edible coatings containing starch have been developed for fruit and vegetable conservation.

Pectin and nanocellulose are especially attractive compounds to form edible coatings since they are main components of fruit and plants structures.

Pectin is a naturally occurring biopolymer that is finding increasing applications in the pharmaceutical and biotechnology industry due to its unique properties that have enabled it to be used as a matrix to coat and/or deliver a variety of drugs, proteins and cells. Pectin is commercially extracted from citrus peels and apple pomace (agroindustry byproducts) under mildly acidic conditions. It could be either fully (HMP, high methoxy pectin) or partially (LMP, low methoxy pectin) methyl esterified. High methoxy pectin forms excellent films. Edible films and coatings may be produced based on pectin for fruit conservation. Pectin is considered an ingredient of the coating composition disclosed herein.

Cellulose is slightly soluble in pure water, but its water solubility can be increased by treating it with alkali to swell the structure, followed by reaction with chloroacetic acid, methyl chloride, or propylene oxide to yield carboxymethyl cellulose (CMC), methyl cellulose (MC), hydroxypropyl methyl cellulose (HPMC), or hydroxylpropyl cellulose (HPC). These derivatives possess good film-forming characteristic, are generally odorless and tasteless, flexible and of moderate strength, transparent, resistant to oil and fats, watersoluble, and moderately permeable to moisture and oxygen transmission. In some cases, nanocellulose (result of mechanical and/or enzymatic breakdown of cellulose) may be useful because of attractive intrinsic properties: nanoscale dimensions, high surface area, morphology, low density, chirality and thermo-mechanical performance. Its assembly into multiphase structures as well as its use to create thin films at the air-solid interface for applications in nano-coatings, sensors, etc. can yield useful outcomes. Nanocellulose is considered an ingredient of the coating composition disclosed herein.

Protein-based coatings may be used for formation of edible coatings and films. The proteins used for films and coatings formation can be divided into two groups, i.e., fibrous proteins and globular proteins. The first are water insoluble and obtained from animal tissues (*e.g*., casein, whey protein, collagen, gelatin, keratin), whereas globular proteins are soluble in water or aqueous solutions of acids, bases, or salts and obtained from plant origin (*e.g*., wheat gluten, soy protein, peanut protein, corn-zein, cotton seed protein). However, as a group, protein coatings are the least developed material for coating use. Vegetable proteins are considered ingredients of the coating composition disclosed herein.

Lipid-based coatings can be made from a wide array of lipid substances including acetylated monoglycerides, natural oils and waxes, and resins. Lipid-based coatings require the inclusion of surfactants, emulsifiers and dispersing agents, and compounds with film-forming properties to produce a homogeneous film over the product to be coated. Wax and oil-based coatings include paraffin wax, candelilla wax, beeswax, carnauba wax, polyethylene wax, and mineral and vegetable oils. Fatty acids and monoglycerides are used for coatings mainly as emulsifiers and dispersing agents. While resins and rosins included in edible coatings are wood rosin and coumarone indene, both of which are used for coating citrus fruits. Shellac resins also can be included in edible coatings, however, it may not be a generally regarded as safe (GRAS) substance as it is only permitted as an indirect food additive in food coatings and adhesives. Certain types of wax coatings are questionable because of the possible harmful effects of some of its components, such as polyethylene (a film-forming compound) in case of petroleum-derivative wax coatings. Lipid-based coating are very useful for controlling dehydration because of their hydrophobic nature, but they cannot be applied to some product surfaces because of their negative effects. For example, lipid-based coatings may remove the natural wax present over certain fruits such as plums, which affect their organoleptic quality. In other cases, such as avocado, lipid-based coatings affect its ripening process producing a lower quality fruit. Vegetable lipids such as carnauba wax and soy oil are ingredients of the coating composition disclosed herein.

Besides forming biopolymers, edible coatings could include active ingredients (e.g., antimicrobials, antioxidants, or functional ingredients) to enhance its functionality improving quality, shelf life, stability, and safety of fresh fruits and vegetable. Antimicrobials and other functional ingredients include organic acids (e.g., citric, acetic, benzoic, lactic, propionic, sorbic), fatty acid esters *(e.g.,* glyceryl monolaurate), polypeptides *(e.g.,* lysozyme, peroxidase, lactoferrin, nisin), plant essential oils (e.g., cinnamon, oregano, lemongrass), nitrites and sulfites, antifungal agents *(e.g.,* natamycin), texture enhancers *(e.g.,* calcium and derivatives), and nutraceuticals (e.g., vitamin E, polyphenolic extract). In this sense, two functional compounds appear as attractive ingredients for edible coating: saponins and its derivatives, and lignin.

Saponins are glycosides occurring primarily but not exclusively in plants and are considered to possess surfactant and several bioactive properties. However, they are often discarded during food processing because they may have a bitter taste. Saponins present surfactant properties useful to form lipid emulsions or dispersions, allowing the formation of the coating disclosed herein. In addition, hydrolyzed saponins (saponins aglycones) have membrane-lytic action on mycelium of fungis such as *Botrytis cinerea* and *Rhizoctonia solani.* Thus, controlling their effects on taste, hydrolyzed saponins can be successfully used for controlling fungi growth in fruits and vegetables. Saponins and its hydrolysates are considered ingredients of the coating composition disclosed herein.

A small part of the total available lignin is being exploited, mainly in the pulp and paper industry. The film forming properties, small particle size, ability to form stable mixtures, in combination with its hydrophobic character make lignin and derivatives an interesting group of materials for the development of coatings and composites. Additionally, the presence of lignin inhibits fungi growth, in part, due to effects on mechanical strength; restriction of the diffusion of enzymes and toxins from the fungus to the plant tissue, and water and nutrients from the tissue to the fungus; and antifungal effects on precursors and lignification of hyphae. Furthermore, lignin, aromatic monomers degraded from lignin and their derivatives may afford good antioxidant, antimicrobial, anti-inflammatory, hepatoprotective, antihypertensive properties Lignin can be obtained by organosolv extraction process (*e.g.,* acetic acid based extraction) from different sources *(e.g.,* wheat straw). Organosolv lignins show significantly better solubility and thermal properties than sulphite or Kraft lignins from cellulose process and it is a superior reagent feedstock due to the absence of sulphur and its easier derivatization. However, lignin obtained from cellulose process also could be used in the formulation of edible coating for fruits and vegetables, and as filler in films, biopolymers or synthetic polymers. Lignins are considered ingredients of the coating composition disclosed herein.

In addition, low quality fiber fraction of mechanical pulps may be used for the production of mechanical pulp based nano-ligno-cellulose. Nano-ligno-cellulose improves the strength properties of handsheets such as z-strength, tensile index, tear index, burst index, E-modulus, strain at break, tensile stiffness and air resistance, being an attractive raw material to include in edible coatings. Nano-ligno-cellulose is considered an ingredient of the coating composition disclosed herein.

In some embodiments, composite coatings provided herein are edible coatings that combine the beneficial properties of different coating ingredients to create a superior film. These coatings may be heterogeneous in nature, consisting of a blend of polysaccharides, protein and/or lipids, and functional compounds.

In some embodiments, it is an object of the present disclosure to provide coatings comprising a blend of effective amounts of components, such as pectin; nanocellulose; lignin and nano-ligno-cellulose from cellulose industry; vegetable protein (*e.g*., soy protein); vegetable lipid (*e.g.,* carnauba wax or soy oil or a mixture thereof), lignin from agroindustry byproducts obtained by organosolv extraction; saponins and its hydrolysates from, *e.g.,* quinoa husk or yucca; and/or natural extracts from the fruit to be coated, which are advantageous in that all materials are derived from vegetable byproducts and products. Moreover, although various types of coatings formed from a variety of natural products have been studied and disclosed, none exhibited the advantageous properties of the coating described herein: components of vegetable origin exclusively (mainly from byproducts and products of agroforestry industry), adaptability to any fruit surface and gas transfer control trough formula modification, presence of new vegetable biopolymers and bioactive compounds (regarding edible coating manufacture) with structural, antioxidant and antimicrobial functions (*e.g.*, nano-ligno-cellulose, organosolv lignin and hydrolyzed saponins).

Accordingly, the present disclosure provides coating compositions and methods of using such for preserving a food product or for preserving a plant. In particular, the coating compositions can provide preservative effects during transportation of a food product or plant over a period of time from a first location to a second location. It is also an object of the disclosure to provide a method of making the coating. Other objects and advantages of the invention will become readily apparent from the ensuing description.

In some embodiments, provided herein are edible, natural, potentially organic, water-washable, and adaptable to different plant surfaces, coatings that extend the shelf life of fruits and vegetables and other products through decreasing dehydration and controlling gas transfer, inhibition of microbial growth and improvement and/or maintenance of their organoleptic characteristics (*e.g*., brightness and firmness). In some embodiments, coatings provided herein are formulated with compounds of vegetable origin exclusively (byproducts and products of agroindustry) already present in greater or lesser extent in fruits and vegetables in their natural state and has the potential to be classified as organic. In some embodiments, coatings provided herein comprise a blend of effective amounts of pectin from fruit peels (concentration range 0.01% - 5% w/v); nanocellulose (concentration range 0.01% - 3% w/v), lignin (concentration range 0.01% - 1% w/v) and nano-ligno-cellulose (concentration range 0.01 - 3% w/v) from cellulose industry; soy protein (concentration range 0.01% - 3% w/v); carnauba wax (concentration range 0.01% - 10% w/v); bioactive lignin from wheat straw (concentration range 0.01% - 1% w/v); bioactive hydrolyzed yucca and quinoa saponins (concentration range 0.01% - 10% w/v); and/or natural extracts (concentration range 0.01% - 1% w/v) from the fruit, vegetable or other substance to be coated.

In some embodiments, coatings provided herein comprise a blend of effective amounts of pectin from fruit peels (concentration range 0.01% - 10% w/v); nanocellulose (concentration range 0.01% - 3% w/v), nano-ligno-cellulose (concentration range 0.01 - 3% w/v); soy protein (concentration range 0.01% - 3% w/v); soy oil (concentration range 0.01%-10%); carnauba wax (concentration range 0.01% - 10% w/v); organosolv lignin from wheat straw (concentration range 0.01% - 1% w/v); saponins from yucca and quinoa and, its hydrolysis derivatives (concentration range 0.01% - 10% w/v); and/or natural extracts (concentration range 0.01% - 1% w/v) from the fruit, vegetable or other substance to be coated.

In some embodiments, because of the predominance of hydrophilic biopolymers (*e.g*., pectin) coatings provided herein can be easily washed with water. In some embodiments, due to the physicochemical heterogeneity of their ingredients (regarding hydrophobicity mainly), specific coatings provided herein can be formulated for each type of vegetable surfaces by changing the concentration of these ingredients in order to improve their formation and performance.

In some embodiments, water and gaseous barrier properties of coatings provided herein can be modified by changing the concentration of their ingredients. In some embodiments, for example, an increase in the amount of compounds having hydrophobic characteristics such as vegetable lipids may increases water barrier properties and change permeability to others gases such as ethylene and carbon dioxide.

In some embodiments, the inhibitory capacity of microbial (*e.g*., fungi and bacteria) growth in coatings provided herein is achieved by using a mixture of biopolymers and bioactive compounds; wheat straw lignin, hydrolyzed saponins and polyphenolic extract of the fruit, vegetable or other substance to be coated. In some embodiments, polyphenolic extract may be used to improve and/or maintain the organoleptic quality of a fruit or vegetable through the incorporation of their own flavor and color compounds.

In some embodiments, coatings provided herein are fully natural alternatives and/or complements to conventional waxy coating and to technologies in plant conservation (*e.g*., refrigeration costs reduction), and help to eliminate or reduce the use of questionable fungicides. In some embodiments, coatings provided herein revalue by-products of agriculture and forestry industries.

### Coating Compositions

In some embodiments, coatings are provided herein that are completely formed with compounds of plant origin, potentially classifiable as organic and made mainly of agroforestry byproducts (revalorization). In some embodiments, coatings provided herein include pectin from fruit peels (concentration range 0.01% - 5% w/v); nanocelullose (concentration range 0.01% - 3% w/v), lignin (concentration range 0.01% - 1% w/v) and nano-ligno-cellulose (concentration range 0.01 - 3% w/v) from cellulose industry; soy protein (concentration range 0.01% - 3% w/v); carnauba wax (concentration range 0.01% - 10% w/v), bioactive lignin from wheat straw (concentration range 0.01% - 1% w/v); bioactive hydrolyzed yucca and quinoa saponins (concentration range 0.01% - 10% w/v); and/or natural extracts (concentration range 0.01% - 1% w/v) from the fruit to be coated.

In some embodiments, coatings provided herein comprise a blend of effective amounts of pectin from fruit peels (concentration range 0.01% - 10% w/v); nanocellulose (concentration range 0.01% - 3% w/v), lignin (concentration range 0.01% - 3% w/v) and nano-ligno-cellulose (concentration range 0.01 - 3% w/v) from cellulose industry; soy protein (concentration range 0.01% - 3% w/v); soy oil (concentration range 0.01%-10%); carnauba wax (concentration range 0.01% - 10% w/v); organosolv lignin from wheat straw (concentration range 0.01% - 1% w/v); saponins from yucca and quinoa and, its hydrolysis derivatives (concentration range 0.01% - 10% w/v); and/or natural extracts (concentration range 0.01% - 1% w/v) from the fruit or vegetable to be coated.

In some embodiments, coatings provided herein are washable with water due to the preponderance of hydrophilic compounds, particularly pectins.

In some embodiments, coatings provided herein have different formulations for each type of fruit considering the characteristics of the peel and its surface (amount of wax, edible peel or not, *etc*.) and the processes associated with production (post-harvest processes) such as controlled ripening.

In some embodiments, coatings provided herein comprise biopolymers and active compounds, such as, for example, nano-ligno-cellulose (strengthener), wheat straw lignin (structural, hydrophobic, antimicrobial) and saponins (surfactant) and hydrolyzed saponins (antifungal agent).

In some embodiments, coatings provided herein comprise mixtures of compounds such as, for example, pectin, nanocellulose, isolated soy proteins, lignins and their derivatives, soy oil, carnauba wax, saponins and hydrolyzed saponins and natural extract of the specific fruit and vegetable to be coated.

In some embodiments, coatings provided herein improve and/or maintain the organoleptic quality of the fruit or vegetable through the incorporation of natural extract by specific fruit.

In some embodiments, coatings provided herein comprise compounds or mixtures of compounds that provide one or more functional features of the coating.

In some embodiments, pectin provides film forming and adhesive features to the coating. In some embodiments, pectin provides structural support to other compounds in the coating. In some embodiments, pectin provides preventing dehydration (*e.g.*, barrier to water), inhibiting microbial growth *(e.g.,* a barrier to oxygen), and decreasing rate of ripening *(e.g.,* barrier to ethylene) features of the coating.

In some embodiments, soy protein provides film forming features of the coating. In some embodiments, nanocellulose provides film forming features of the coating. In some embodiments, fruit extract maintains and/or improves organoleptic features of the coating. In some embodiments, soy oil and carnauba wax provide preventing dehydration (*e.g*., barrier to water), adaptability to wax content of a surface, and suspension forming features of the coating. In some embodiments, saponins and its derivatives provides surfactant, fungicide, or adaptability to wax content of a surface features of the coating. In some embodiments, lignin provides preventing dehydration (*e.g*., barrier to water) and antifungal features of the coating. In some embodiments, nano-ligno-cellulose provides structural features, preventing dehydration (*e.g.,* barrier to water) and inhibiting microbial growth *(e.g.,* barrier to oxygen) features to the coating.

In some embodiments, coating compositions, as provided herein, comprise pectin, one or more constituents of vegetable lipid, lignin, and saponin.

As used herein, "pectin" refers to a polysaccharide that can be obtained from the primary cell wall in a plant. In some embodiments, pectin is extracted from fruit peel. In some embodiments, pectin is high methoxyl pectin (HMP) referring to pectin having at least 50% methylated galacturonic acid groups. In some embodiments, pectin is low methoxyl pectin (LMP) referring to pectin having less than 50% methylated galacturonic acid groups.

In some embodiments, the coating composition comprises pectin at a concentration between about 0.01% to 5% w/v. In some embodiments, the coating composition comprises pectin at a concentration between about 0.01% to 4% w/v, about 0.01% to 3% w/v, about 0.01% to 2% w/v, about 0.01% to 1% w/v, about 0.01% to 0.5% w/v, about 0.01% to 0.1% w/v, or about 0.01% to 0.05% w/v. In some embodiments, the coating composition comprises pectin at a concentration between about 0.05% to 5% w/v, about 0.1% to 5% w/v, about 0.5% to 5% w/v, about 1% to 5% w/v, about 2% to 5% w/v, about 3% to 5% w/v, or about 4% to 5% w/v.

In some embodiments, the coating composition comprises pectin at a concentration between about 0.01 to 10% w/v, 0.01% to 9% w/v, about 0.01% to 8% w/v, about 0.01% to 7% w/v, about 0.01% to 6% w/v, about 0.01% to 5% w/v, about 0.01% to 4% w/v, about 0.01% to 3% w/v, about 0.01% to 2% w/v, about 0.01% to 1% w/v, about 0.01% to 0.5% w/v, about 0.01% to 0.1% w/v, or about 0.01% to 0.05% w/v. In some embodiments, the coating composition comprises pectin at a concentration between about 0.05% to 10% w/v, about 0.1% to 10% w/v, about 0.5% to 10% w/v, about 1% to 10% w/v, about 2% to 10% w/v, about 3% to 10% w/v, about 4% to 10% w/v, about 5% to 10% w/v, about 6% to 10% w/v, about 7% to 10% w/v, about 8% to 10% w/v, or about 9% to 10% w/v.

As used herein, "one or more constituents of a lipid" refers to an unsubstituted long-chain hydrocarbon or substituted long-chain hydrocarbon. In some embodiments, the one or more constituents of a lipid is derived from a plant. In some embodiments, the one or more constituents of a lipid is soy oil, carnauba wax, or a mixture thereof. Soy oil as well as other vegetable oil can be crude or refined. Crude soy oil comprises 95 to 97 % triglycerides, 1.5 to 2.5 phospholipids, 1.6 % unsaponifiable matter, 0.3 to 0.7 free fatty acids, 1 to 3 ppm metals. Refined soy oil comprises >99 % triglycerides, 0.0003 to 0.045 phospholipids, 0.3 % unsaponifiable matter, <0.05 free fatty acids, 0.1 to 0.3 ppm metals. In some embodiments, carnauba wax comprises 80 to 85% fatty acid esters, 10 to 15% fatty alcohols, 3 to 6% acids, and 1 to 3% hydrocarbons. In some embodiments, carnauba wax comprises about 20% fatty diols, about 6% hydroxylated fatty acids, and about 10% cinnamic acid. In some embodiments cinnamic acid is hydroxylated. In some embodiments, cinnamic acid is methoxylated.

Examples of the one or more constituents of a lipid include, but are not limited to, cottonseed oil, palm oil, soybean oil, flaxseed oil, linseed oil, hempseed oil, coconut oil, olive oil, safflower oil, corn oil, peanut oil, canola oil, soybean oil, and avocado oil.

In some embodiments, the coating composition comprises one or more constituents of a lipid at a concentration between about 0.01% to 10% w/v. In some embodiments, the coating composition comprises one or more constituents of a wax at a concentration between about 0.01% to 0.1% w/v, about 0.01% to 1% w/v, about 0.01% to 2.5% w/v, about 0.01% to 5% w/v, or about 0.01% to 7.5% w/v. In some embodiments, the coating composition comprises one or more constituents of a lipid at a concentration between about 0.1% to 10% w/v, about 1% to 10% w/v, about 2.5% to 10% w/v, about 5% to 10% w/v, or about 75% to 10% w/v.

As used herein, "lignin" refers to a complex polymer of hydroxylated and methoxylated phenylpropanoids that can be obtained from a plant cell wall. Lignin can be extracted from various sources, including but not limited to, jute, hemp, cotton, wood pulp, pine straw, alfalfa, kenaf, and flax fiber. In some embodiments, the lignin is extracted from wheat straw. In some embodiments, the lignin is acid extracted.

In some embodiments, the coating composition comprises lignin at a concentration between about 0.01% to 1% w/v. In some embodiments, the coating composition comprises lignin at a concentration between about 0.01% to 0.75% w/v, about 0.01% to 0.5% w/v, about 0.01% to 0.25% w/v, about 0.01% to 0.1% w/v, or about 0.01% to 0.05% w/v. In some embodiments, the coating composition comprises lignin at a concentration between about 0.05% to 1% w/v, about 0.1% to 1% w/v, about 0.25% to 1% w/v, about 0.5% to 1% w/v, or about 0.75% to 1% w/v.

In some embodiments, the coating composition comprises lignin at a concentration between about 0.01% to 3% w/v, 0.01% to 2.5% w/v, about 0.01% to 2% w/v, about 0.01% to 1.5% w/v, about 0.01% to 1% w/v, about 0.01% to 0.1% w/v, or about 0.01% to 0.05% w/v. In some embodiments, the coating composition comprises lignin at a concentration between about 0.05% to 3% w/v, about 0.1% to 3% w/v, about 0.5% to 3% w/v, about 1% to 3% w/v, about 1.5% to 3% w/v, about 2% to 3% w/v, or about 2.5% to 3% w/v.

As used herein, "saponin" refers to steroid glycosides and terpenoid glycosides that can be obtained from certain plants. Saponin can be extracted from various sources, including but not limited to, beans, peanuts, soy, yucca, quinoa, potatoes, and tomatoes. In some embodiments, the saponin is extracted from quinoa plants.

In some embodiments, the coating composition comprises saponin at a concentration between about 0.01% to 10% w/v. In some embodiments, the coating composition comprises saponin at a concentration between about 0.01% to 0.1% w/v, about 0.01% to 1% w/v, about 0.01% to 2.5% w/v, about 0.01% to 5% w/v, or about 0.01% to 7.5% w/v. In some embodiments, the coating composition comprises saponin at a concentration between about 0.1% to 10% w/v, about 1% to 10% w/v, about 2.5% to 10% w/v, about 5% to 10% w/v, or about 7.5% to 10% w/v.

The coating composition provided in the instant specification may further comprise at least one component selected from the group consisting of nanocellulose, nano-ligno-cellulose, soy protein, or natural fruit extract.

As used herein, "nanocelluose" refers to nanosized cellulose, which is a polysaccharide comprising hydrogen bonded chains of (3-1,4-linked glucose. Nanocellulose can be prepared from various cellulose sources including, but not limited to, wood pulp, plants, and algae.

In some embodiments, the coating composition comprises nanocelluose at a concentration between about 0.01% to 3% w/v. In some embodiments, the coating composition comprises nanocelluose at a concentration between about 0.01% to 2% w/v, about 0.01% to 1% w/v, about 0.01% to 0.05% w/v, about 0.01% to 0.1% w/v, or about 0.01% to 0.05% w/v. In some embodiments, the coating composition comprises nanocelluose at a concentration between about 0.05% to 3% w/v, about 0.1% to 3% w/v, about 0.5% to 3% w/v, about 1% to 3% w/v, or about 2% to 3% w/v.

As used herein, "nano-ligno-cellulose" refers to a nanosized polymer comprising cellulose and lignin. Nano-ligno-cellulose can be prepared from various sources including, but not limited to, wood, plants, trees, rice, wheat, and corn.

In some embodiments, the coating composition comprises nano-ligno-cellulose at a concentration between about 0.01% to 3% w/v. In some embodiments, the coating composition comprises nano-ligno-cellulose at a concentration between about 0.01% to 2% w/v, about 0.01% to 1% w/v, about 0.01% to 0.05% w/v, about 0.01% to 0.1% w/v, or about 0.01% to 0.05% w/v. In some embodiments, the coating composition comprises nano-ligno-cellulose at a concentration between about 0.05% to 3% w/v, about 0.1% to 3% w/v, about 0.5% to 3% w/v, about 1% to 3% w/v, or about 2% to 3% w/v.

As used herein, "vegetable protein" refers to a protein that is isolated from a vegetable. Examples of vegetable protein include, but are not limited to, soy proteins, corn zein, wheat gluten and seaweed proteins.

In some embodiments, the coating composition comprises vegetable protein at a concentration between about 0.01% to 3% w/v. In some embodiments, the coating composition comprises vegetable protein at a concentration between about 0.01% to 2% w/v, about 0.01% to 1% w/v, about 0.01% to 0.05% w/v, about 0.01% to 0.1% w/v, or about 0.01% to 0.05% w/v. In some embodiments, the coating composition comprises vegetable protein at a concentration between about 0.05% to 3% w/v, about 0.1% to 3% w/v, about 0.5% to 3% w/v, about 1% to 3% w/v, or about 2% to 3% w/v.

As used herein, "soy protein" refers to a protein that is isolated from soybean. In some embodiments, the coating composition comprises a commercial form of soy protein such as soy flour, soy grits, soy concentrate, soy isolate, or textured soy protein.

In some embodiments, the coating composition comprises soy protein at a concentration between about 0.01% to 3% w/v. In some embodiments, the coating composition comprises soy protein at a concentration between about 0.01% to 2% w/v, about 0.01% to 1% w/v, about 0.01% to 0.05% w/v, about 0.01% to 0.1% w/v, or about 0.01% to 0.05% w/v. In some embodiments, the coating composition comprises soy protein at a concentration between about 0.05% to 3% w/v, about 0.1% to 3% w/v, about 0.5% to 3% w/v, about 1% to 3% w/v, or about 2% to 3% w/v.

As used herein, "natural fruit extract" refers to a composition extracted from a natural fruit. Natural fruit extract can be prepared from various sources including, but not limited to, apples, peaches, nectarines, plums, avocados, bananas, coconuts, pineapples, pomegranates, and watermelons. In some embodiments, the natural fruit extract is a powder. In some embodiments, the coating composition comprises a natural fruit extract of the fruit to be coated. For example, the coating composition comprising natural fruit extract from a plum is coated onto a plum.

In some embodiments, the coating composition comprises natural fruit extract at a concentration between about 0.01% to 1% w/v. In some embodiments, the coating composition comprises natural fruit extract at a concentration between about 0.01% to 0.75% w/v, about 0.01% to 0.5% w/v, about 0.01% to 0.25% w/v, about 0.01% to 0.1% w/v, or about 0.01% to 0.05% w/v. In some embodiments, the coating composition comprises natural fruit extract at a concentration between about 0.05% to 1% w/v, about 0.1% to 1% w/v, about 0.25% to 1% w/v, about 0.5% to 1% w/v, or about 0.75% to 1% w/v.

The coating composition, as disclosed herein, may further comprise one or more additives including, but not limited to, fungicides, bactericides, or nutraceuticals. In some embodiments, the coating composition comprises a fungicide. In some embodiments, the fungicide is fludioxonil. In some embodiments, the fungicide is SCHOLAR® 230SC Fungicide (Syngenta Canada, Inc., Ontario, Canada). In some embodiments, the coating composition comprises a bactericide. In some embodiments, the bactericide is an organic acid. In some embodiments, the coating composition comprises a nutraceutical. In some embodiments, the nutraceutical is a polyphenolic extract. In some embodiments, the nutraceutical is a vitamin.

The coating composition may comprise fludioxonil at a concentration between about 15% to 25%. In some embodiments, the coating composition comprises fludioxonil at a concentration between about 16% to 24%, about 17% to 23%, about 18% to 22%, or about 19% to 21%. In some embodiments, the coating composition comprises fludioxonil at a concentration of about 20%.

In some embodiments, the coating composition comprises fludioxonil at a concentration between about 16% to 25%, about 17% to 25%, about 18% to 25%, about 19% to 25%, about 20% to 25%, about 21% to 25%, about 22% to 25%, about 23% to 25%, or about 24% to 25%. In some embodiments, the coating composition comprises fludioxonil at a concentration between about 15% to 24%, about 15% to 23%, about 15% to 22%, about 15% to 21%, about 15% to 20%, about 15% to 19%, about 15% to 18%, about 15% to 17%, or about 15% to 16%.

The coating composition may comprise fludioxonil at a concentration between about 0.01% to 3%. In some embodiments, the coating composition comprises fludioxonil at a concentration between about 0.1% to 3%, about 1% to 3%, about 1.5% to 3%, about 2% to 3%, or about 2.5% to 3%. In some embodiments, the coating composition comprises fludioxonil at a concentration between about 0.01% to 2.5%, about 0.01% to 2%, about 0.01% to 1.5%, about 0.01% to 1%, or about 0.01% to 0.1%.

An additive including, but not limited to, a fungicide, a bactericide, or a nutraceutical, may be added to a coating composition at any time. In some embodiments, the additive is added to the coating composition during its production. In some embodiments, the fungicide is added to the coating composition during its production. In some embodiments, the bactericide is added to the coating composition during its production. In some embodiments, the nutraceutical is added to the coating composition during its production.

In some embodiments, the additive is added to the coating composition following its production. In some embodiments, the fungicide is added to the coating composition following its production. In some embodiments, the bactericide is added to the coating composition following its production. In some embodiments, the nutraceutical is added to the coating composition following its production.

In some embodiments, the additive is added to the coating composition prior to its application. In some embodiments, the fungicide is added to the coating composition prior to its application. In some embodiments, the bactericide is added to the coating composition prior to its application. In some embodiments, the nutraceutical is added to the coating composition prior to its application.

The coating composition can be prepared for coating a high wax surface or a low wax surface. In some embodiments, the high wax surface is an orange, lemon, clementine, mandarin, or grapefruit. In some embodiments, the low wax surface is a peach, nectarine, , avocado, apple, kiwi, or berry.

In some embodiments, the coating composition for coating a high wax surface comprises between about 2% to 10% w/v pectin, about 0.2% to 10% w/v one or more constituents of a wax, about 0.05% to 0.1% w/v lignin, about 0.2% to 10% w/v saponin, about 0.5% to 1% nanocellulose, and about 1% to 3% soy protein.

In some embodiments, the coating composition for coating a low wax surface comprises between about 0.01% to 2.5% w/v pectin, about 0.01% to 0.2% w/v one or more constituents of a wax, about 0.01% to 0.05% w/v lignin, about 0.05% to 0.1% w/v saponin, about 0.1% to 0.5% nanocellulose, and about 0.1% to 1% soy protein.

The coating composition can be prepared for coating a fruit having high lipid fruit peel, a fruit having low lipid fruit peel, or a berry. In some embodiments, the fruit having high lipid fruit peel is an orange, lemon, clementine, mandarin, or grapefruit. In some embodiments, the fruit having low lipid fruit peel is a peach, nectarine, avocado, apple, kiwi, or berry. In some embodiments, the berry is a strawberry, raspberry, blueberry, red-currant, black-currant, grape, tomato, cucumber, eggplant, or banana.

A coating composition for coating a fruit having high lipid fruit peel, a fruit having low lipid fruit peel, or a berry in accordance with the present disclosure can be prepared with various concentrations of components as shown in Table 1.

**Table 1. Concentration Ranges of Components of the Coating Composition for Fruits.**

| | Concentration (% w/v) | | |
|---|---|---|---|
| Component | High lipid fruit peel | Low lipid fruit peel | Berries |
| Vegetable lipid | 10.0 - 0.2 | 0.2 - 0.01 | 1.0 - 0.01 |
| Hydrolyzed saponin | 10.0 - 0.2 | 0.2 - 0.01 | 1.0 - 0.01 |
| Non-hydrolyzed saponin | 10.0 - 0.2 | 0.2 - 0.01 | 1.0 - 0.01 |
| Wheat straw lignin | 1.0 - 0.1 | 0.1 - 0.01 | 0.5 - 0.05 |
| GENU pectin type LM-101 AS | 10.0 -2.0 | 2.5 -0.01 | 2.5 -0.01 |
| GENU pectin type LM-104 AS | 10.0-2.0 | 2.5 -0.01 | 2.5 -0.01 |
| GENU pectin type 105 | 10.0-2.0 | 2.5 -0.01 | 2.5 -0.01 |
| Peach extract | 1.0 - 0.25 | 1.0 - 0.01 | 1.0 - 0.01 |
| Plum extract | 1.0 - 0.25 | 1.0 - 0.01 | 1.0 - 0.01 |
| Red apple extract | 1.0 - 0.25 | 1.0 - 0.01 | 1.0 - 0.01 |
| Green apple extract | 1.0 - 0.25 | 1.0 - 0.01 | 1.0 - 0.01 |
| Skin orange extract | 1.0 - 0.25 | 1.0 - 0.01 | 1.0 - 0.01 |
| Nanocellulose | 3.0 - 0.50 | 0.5 - 0.01 | 0.5 - 0.01 |
| Isolated Soybean protein | 3.0 - 0.5 | 0.5 - 0.01 | 0.5 - 0.01 |

### Preparation of Coating Compositions

The method of producing the coating composition, as provided herein, comprises homogenizing in water one or more constituents of vegetable lipid, lignin, and saponin with high temperature and high pressure to form a homogenized emulsion or dispersion and dissolving pectin into the homogenized mixture having low temperature.

As used herein, "homogenizing" refers to producing a homogenized (e.g., uniform) emulsion or dispersion of two or more components with temperature and pressure. In some embodiments, homogenizing comprises reducing one component of the mixture into small particles and distributing them evenly into another component of the mixture.

In some embodiments, high temperature is 70-100 °C. In some embodiments, high temperature is 70-95 °C, 70-90 °C, 70-85 °C, 70-80 °C, or 70-75 °C. In some embodiments, high temperature is 75-100 °C, 80-100 °C, 85-100 °C, 90-100 °C, or 95-100 °C. In some embodiments, low temperature is below 50°C. In some embodiments, low temperature is below 50°C, below 40 °C, below 30 °C, below 20 °C, below 10 °C, below 5 °C or below 0 °C.

In some embodiments, high pressure is between about 400 to 1300 bar. In some embodiments, high pressure is between about 400 to 1200 bar, about 400 to 1100 bar, about 400 to 1000 bar, about 400 to 900 bar, about 400 to 800 bar, about 400 to 700 bar, about 400 to 600 bar, or about 400 to 500 bar.

In some embodiments, low pressure is between about 10 to 200 bar. In some embodiments, low pressure is between about 10 to 175 bar, about 10 to 150 bar, about 10 to 125 bar, about 10 to 100 bar, about 10 to 75 bar, about 10 to 50 bar, or about 10 to 25 bar. In some embodiments, low pressure is between about 25 to 200 bar, about 50 to 200 bar, about 75 to 200 bar, about 100 to 200 bar, about 125 to 200 bar, about 150 to 200 bar, or about 175 to 200 bar.

The method of producing the coating composition provided in the instant specification may further comprise homogenizing nano-ligno-cellulose. The method of producing the coating composition provided in the instant specification may further comprise dispersing at least one or more components selected from nanocellulose, soy protein, or natural fruit extract. In some embodiments, the method of producing the coating composition comprises further homogenizing the coating composition with low temperature and low pressure.

### Methods of Use

Any of the coating compositions described herein may be used for preserving a food product or a plant. As used herein, "preserving" refers to reducing deterioration of the food product or the plant, reducing dehydration of the food product or the plant, or reducing microorganism growth on the food product or the plant. As used herein, "reducing" refers to hindering, slowing, retarding, stabilizing, and/or postponing alteration of one or more physical features of the food product or the plant.

In some embodiments, the preserving effects of the coating compositions comprises reducing deterioration of the food product or the plant. In some embodiments, the preserving effects of the coating composition comprises reducing the percent weight loss of the food product or the plant *(e.g.,* by at least 0.5%, 1%, 2%, 3%, 4%, 5%, 6%, 7%, 8%, 9%, 10%, 11%, 12%, 13%, 14%, 15% or more). In some embodiments, the preserving effects of the coating compositions comprises reducing microorganism growth *(e.g.,* by at least 5%, 10%, 20%, 30%, 40%, 50%, 60%, 70%, 80%, 90%, 95%, or more) on the food product or the plant.

As used herein, "an effective amount" of the coating composition refers to the amount of the coating composition required to confer the food product or the plant with the preserving effects of the coating composition. The food product or the plant need not be completely coated with the coating composition to confer the preserving effects of the coating composition. In some embodiments, the food product surface or the plant surface is completely coated with the coating composition. In some embodiments, the food product surface or the plant surface is partially coated (*e.g.,* at least 95%, 90%, 80%, 70%, 60%, 50%, 40%, 30%, 20%, 10%, 5%, or less) with the coating composition.

Determination of whether an effective amount of the coating composition as described herein achieved the preserving effects would be evident to one of skill in the art. Effective amounts vary, as recognized by those skilled in the art, depending on the particular surface being coated, the method of coating the surface, the method of transporting the coated surface, the duration of transportation of the coated surface and like factors within the knowledge and expertise of the practitioner. These factors are well known to those of ordinary skill in the art and can be addressed with no more than routine experimentation.

The coating compositions described herein may be used for preserving a food product. In some embodiments, the method for preserving a food product comprises coating the food product with an effective amount of the coating composition to preserve the food product. Examples of food products include, but are not limited to, fruits, vegetables, nuts, and plants or components thereof.

The coating compositions described herein may be used for preserving a plant. In some embodiments, the method for preserving a plant or component thereof comprises applying an effective amount of the coating composition to the outer surface of the plant or component thereof. In some embodiments, the plant or component thereof comprises a flower and its stem. In some embodiments, the flower and its stem have been separated from the plant prior to applying the coating. In some embodiments, the plant or component thereof comprises a fruit. In some embodiments, the fruit has been separated from the plant prior to applying the coating.

The coating composition may be applied to a surface by various methods. In some embodiments, the coating composition is sprayed onto the surface. In some embodiments, the coating composition is electro-sprayed onto the surface. Accordingly, in some embodiments, devices are provided for spraying a coating composition (e.g., a spray bottle, an electrospray device or other device) on a surface. In some embodiments, the device comprises a reservoir for storing one or more components of a coating composition and one or more conduits fluidically connecting the reservoir with a nozzle or atomizer configured for depositing the composition onto a surface. In some embodiments, the device is further configured with a fluid transfer component (e.g., a pump) configured for transferring the one or more components of the coating composition via the one or more conduits to the nozzle or atomizer. Devices may further comprise one or more mixing chambers configured for mixing one or more components of the coating composition. In some embodiments, the one or more mixing chambers are positioned upstream of the nozzle or atomizer and are configured for mixing the one or more components prior to discharge from the nozzle or atomizer. The one or more mixing chambers may be positioned upstream or downstream from a fluid transfer device, in some embodiments. In some embodiments, the device is configured to employ electricity to disperse the coating composition.

A variety of surfaces can be coated with the coating composition according to the methods described herein. In some embodiments, the coating composition is coated onto the surface of a food product. Examples of food products include, but are not limited to, fruits, vegetables, and nuts. In some embodiments, the coating composition is coated onto the surface of a plant or component thereof. In some embodiments, the plant or component thereof comprises a flower and its stem.

It should be appreciated that the methods disclosed herein may be useful for preserving a food product or a plant during transportation over a period of time from a first location to a second location. In some embodiments, the method for transporting a food product over a period of time from a first location to a second location comprises transporting a food product coated with the coating composition over a period of time from a first location to a second location, wherein the coating composition preserves the food product over the period of time.

In some embodiments, the period of time is between about 1 to 60 days. In some embodiments, the period of time is between about 1 to 50 days, 1 to 40 days, 1 to 30 days, 1 to 20 days, 1 to 10 days, or 1 to 5 days. In some embodiments, the period of time is between about 5 to 60 days, 10 to 60 days, 20 to 60 days, 30 to 60 days, 40 to 60 days, or 50 to 60 days. In some embodiments, the period of time is 1 day or more, 2 days or more, 3 days or more, 4 days or more, 5 days or more, 6 days or more, or 7 days or more.

The present method encompasses selecting a coating composition based on one or more physical features of the object to be coated. In some embodiments, the method for preserving a food product comprises (a) evaluating surface hydrophobicity of the food product; (b) selecting a coating composition for preserving a food product based on (a); and (c) coating the food product with the coating composition.

The present disclosure is further illustrated by the following Examples, which in no way should be construed as further limiting. The entire contents of all of the references (including literature references, issued patents, published patent applications, and co-pending patent applications) cited throughout this application are hereby expressly incorporated by reference.

### EXAMPLES

### Example 1. The coating composition reduces percent weight loss of fruits.

The effects of the coating composition on the percent weight loss of fruits was evaluated. Fruits (*e.g*., nectarines, plums, avocados and apples) were coated with different coating compositions as described herein. Uncoated fruits or fruits coated with a commercially available product were used as controls. The weight of the fruits was measured and the fruits were transferred to determined temperature: 0°C for nectarine (transportation condition) and 20 °C for plums, avocados and apples (room condition). At various times after storage at these conditions, the weight of the fruits was measured.

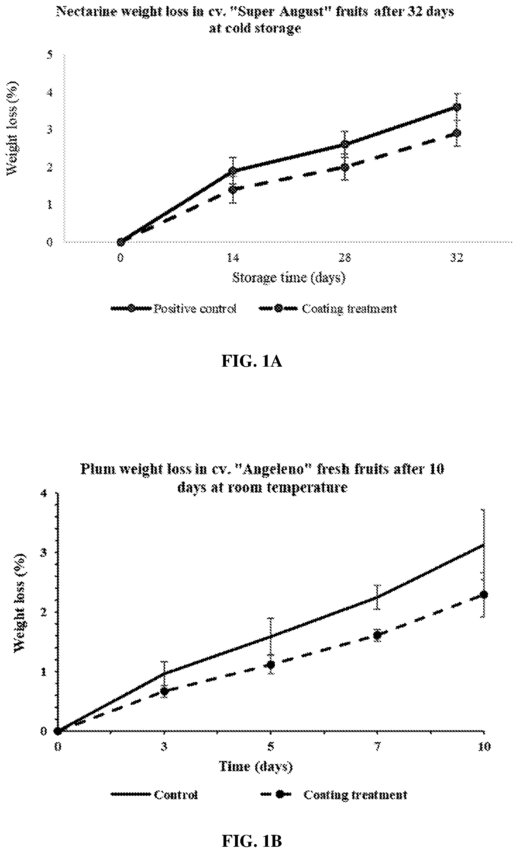

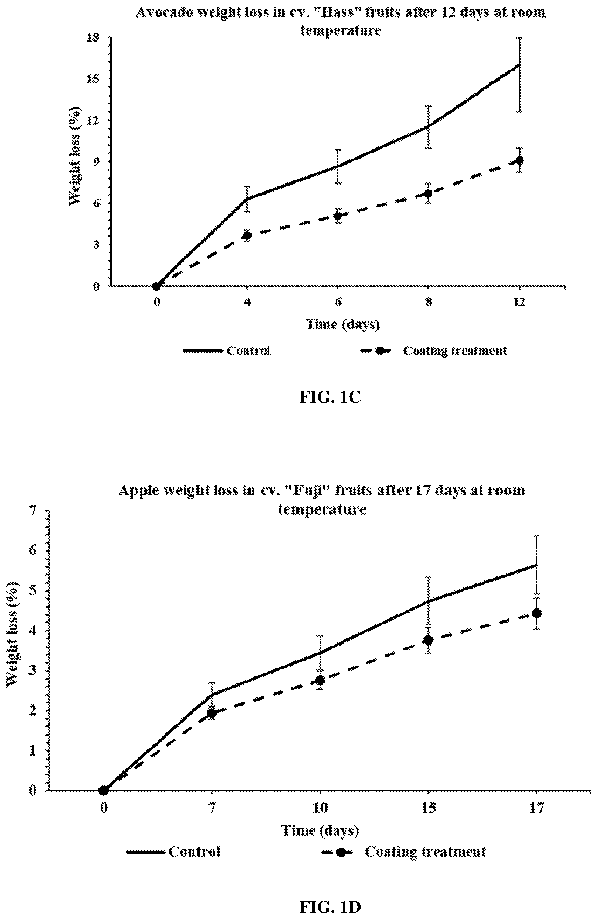

The percent weight loss of nectarines (Fig.1A), coated with the coating compositions provided herein were similar to the percent weight loss of the control fruits coated with a commercially available coating. Plums (Fig. 1B), avocados (Fig. 1C), and apples (Fig. 1D) coated with the coating compositions provided herein had less percent weight loss compared to uncovered plums, avocados and apples. Taken together, the above results showed that the coating composition of the instant specification reduced the percent weight loss of the fruits indicating that the coating composition effectively prevented dehydration of the fruits.

### Example 2. The coating composition reduces rotting of fruits.

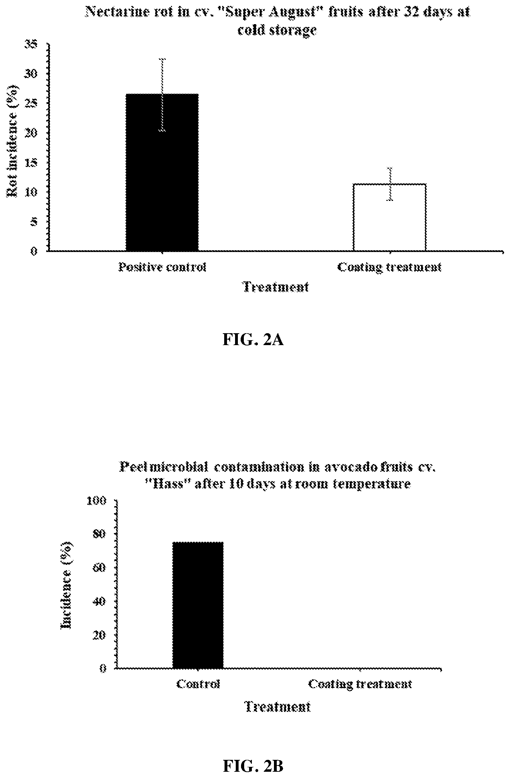

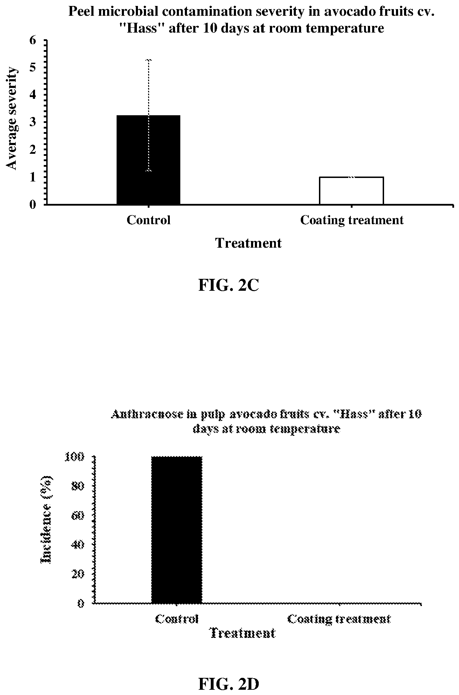

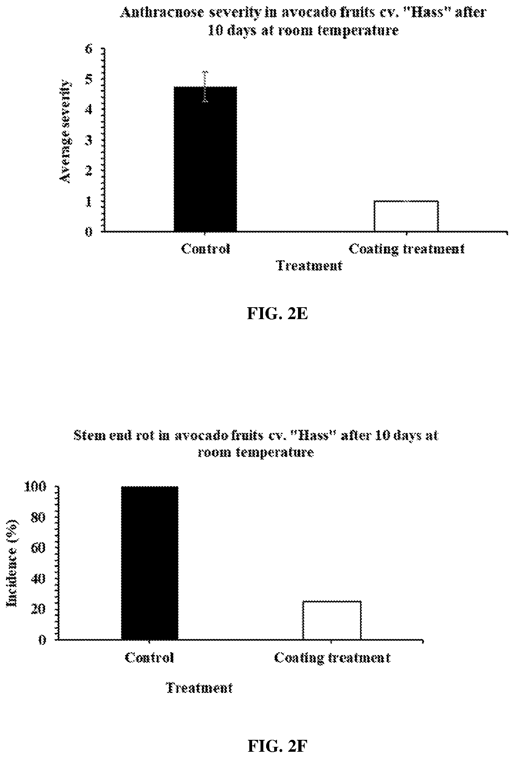

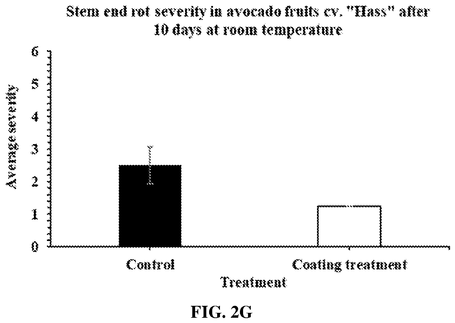

To examine the effects of the coating composition on rotting of fruits, different fruits were treated with the coating composition, stored, and analyzed for rot incidence, peel microbial contamination incidence and severity, anthracnose incidence and severity, and stem end rot incidence and severity. Rot incidence was reduced in coated nectarines compared to controls coated with a commercial coating (FIG. 2A). Compared to untreated controls, coated avocados had reduced peel microbial contamination incidence (FIG. 2B) and reduced peel microbial contamination severity (FIG. 2C). Anthracnose incidence (FIG. 2D) and anthracnose severity (FIG. 2E) of coated avocados was reduced compared to control untreated avocados. Stem end rot incidence (FIG. 2F) and stem end rot severity (FIG. 2G) of coated avocados was reduced compared to control untreated avocados.

### Example 3. Antifungal effect of hydrolyzed saponin extract of quinoa on mycelial growth of the fungus Botrytis cinerea.

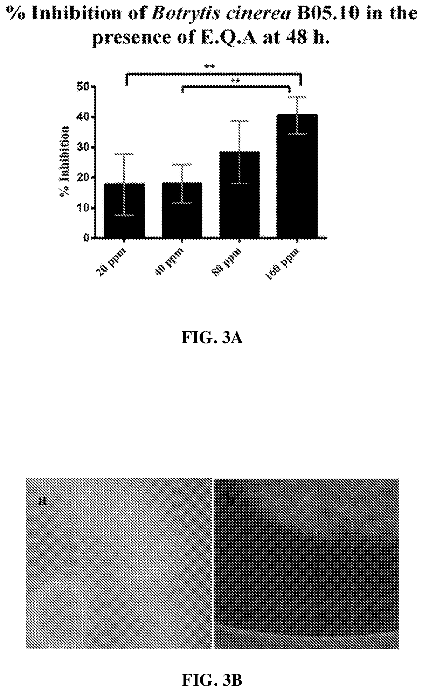

To examine the effects of hydrolyzed saponin extract of quinoa on mycelial growth of the fungus *Botrytis cinerea,* different concentrations of hydrolyzed saponin extract of quinoa were incubated with *Botrytis cinerea* strain B05.10 for 48 hours and the percent inhibition was determined. Hydrolyzed saponin extract of quinoa inhibited mycelial growth of the fungus *Botrytis cinerea* in a dose dependent manner using (FIG. 3A). Mycelial growth inhibition in the presence of hydrolyzed saponin extract of quinoa was visually observed after 48 hours (FIG. 3B).

### Example 4. Improvement or maintenance of the appearance of the fruits treated with a coating composition.

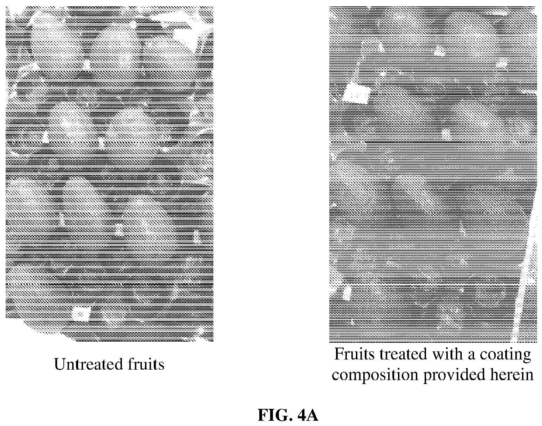

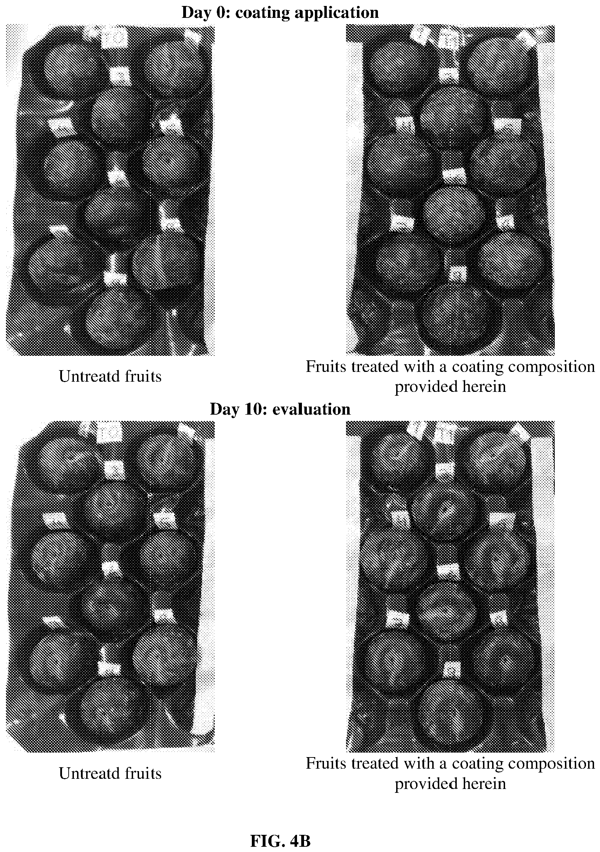

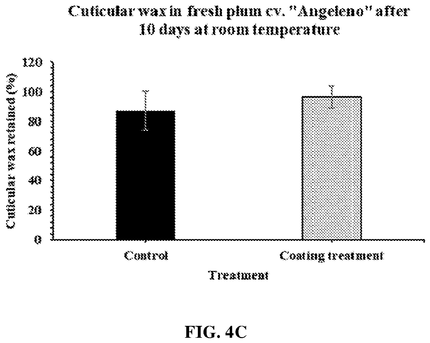

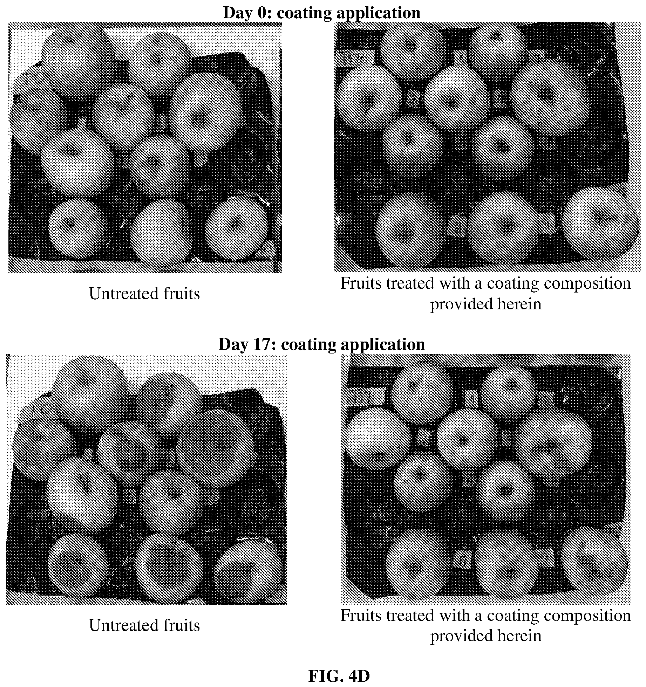

To examine the effects of the coating composition on the appearance of fruit, different fruits were treated with the coating composition and stored at room temperature (20 °C). Untreated fruit was used as a control. After specified days of storage, the appearance of the fruit was observed. Compared to untreated control samples, no alteration in appearance was observed for coated avocados (FIG. 4A), coated plums (FIG. 4B), and coated apples (FIG. 4D). Cuticular wax was similarly retained by untreated control plums and coated plums (FIGs. 4B-4C).

### Example 5. Demonstration of no negative effect of the coating composition on natural ripening process of avocados.

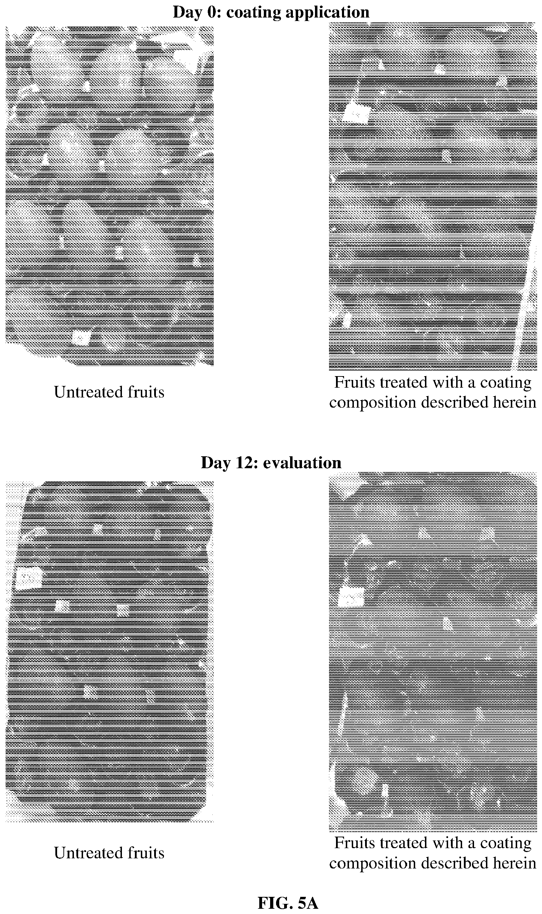

To examine the effects of the coating composition on the turning color of fruit, avocados were treated with the coating composition and stored at room temperature (20 °C). Untreated avocados were used as a control. After 12 days of storage, the peel color was observed. Ripening was evaluated by the following peel color change rating: 1 = green; 2 = 0-25%; 3 = 25-50%; 4 = 50-75% and 5 = 75 -100% black. No alteration in natural ripening of coated avocados was observed compared to control untreated avocados (FIGs. 5A-5B).

### Example 6. Preparation of a coating composition.

The following description provides an exemplary preparation of a coating composition to be used in accordance with methods of the disclosure.

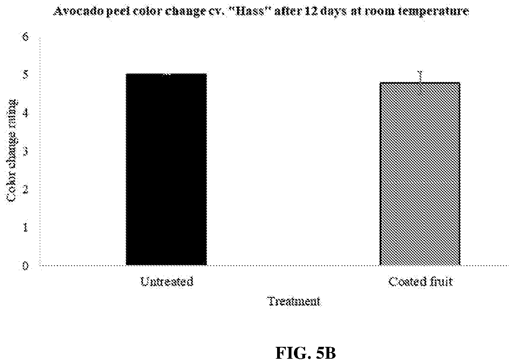

As shown in Figure 5, deionized water at room temperature is added into a mixing tank and heated to approximately 80-90°C (Heat Exchanger 1). Saponin and hydrolyzed saponins extracted from quinoa, organosolv lignin extracted from wheat straw, a vegetable lipid, and nano-ligno-cellulose were added to the mixing tank and stirred for 5 to 10 minutes (Mixer 1). The mixture was transferred to a first homogenizer (Homogenizer 1). The mixture was homogenized with high temperature and high pressure to form a homogenized mixture (emulsion or dispersion) comprising saponins, vegetable lipid, lignin, and nano-ligno-cellulose emulsified or dispersed into the liquid (water). The homogenized mixture was transferred into the second heat exchanger and the temperature was decreased to below 40°C (Heat Exchanger 2). The homogenized mixture was transferred to the second mixer and pectin, vegetable protein, nanocellulose, and fruit extract were added (Mixer 2). Following 5-10 minutes of stirring, the homogenized mixture is transferred to a second homogenizer (Homogenizer 2). The homogenized mixture is homogenized with low temperature and low pressure to ensure uniform dispersion of the components of the mixture.

A coating composition in accordance with the present disclosure can be prepared with various concentrations of components as shown in Table 2.

**Table 2. Concentration Ranges of Components of the Coating Composition.**

| **Component** | **Concentration Range** |
|---|---|
| Pectin from fruit peels | 0.01% - 5% w/v |
| Nanocelullose | 0.01% - 3.0% w/v |
| Organosolv Lignin | 0.001% - 1.0% w/v |
| Nano-ligno-cellulose | 0.01% - 3.0% w/v |
| Vegetable Protein | 0.01% - 3.0% w/v |
| Vegetable Lipid | 0.01% - 10.0% w/v |
| Saponins | 0.01% - 1.0% w/v |
| Hydrolyzed Saponins | 0.01% - 10.0% w/v |

The coating composition can be prepared at laboratory scale or industrial scale. The exemplary production of the coating composition utilized a mixer (beaker with overhead paddle stirrer, DLAB, Dragon Laboratory Instruments Limited, model: OS40-S; 40L capacity) and a homogenizer (bench scale disperser equipment; DLAB, Dragon Laboratory Instruments Limited, model: D-500; 10mL - 8,000 mL capacity).

Components of the coating composition can be obtained from various sources. In some embodiments, pectin was obtained from CP Kelco Company. In some embodiments, nanocellulose and nano-ligno-cellulose were obtained from Bioforest. In some embodiments, vegetable protein was obtained from Prinal. In some embodiments, vegetable lipid was obtained from Natural Care. In some embodiments, natural fruit extracts were obtained from Changsha Vigorous-Tech Co., Ltd.

### Example 7. Extraction of saponins from quinoa and hydrolysis process.

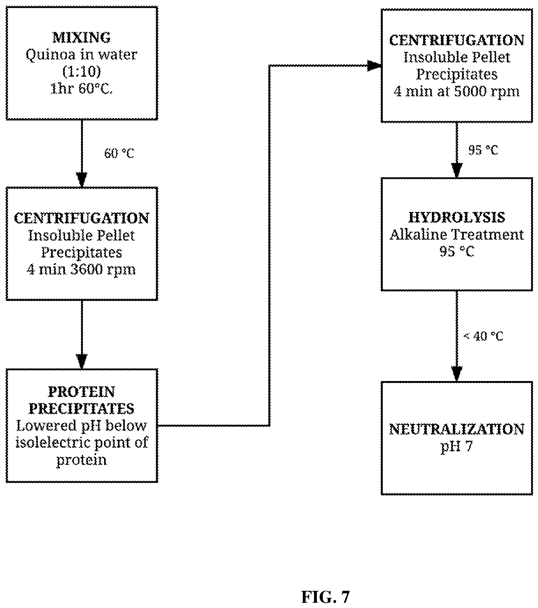

Saponins can be extracted from quinoa according to the block flow diagram in Figure 7. Quinoa was mixed at a ratio of 1:10 with water and stirred for one hour at room temperature. Insoluble materials were pelleted by centrifugation at 3600 rpm at room temperature for 4 minutes. The pH of the supernatant was lowered below the isoelectric point of the protein to facilitate protein precipitation. The precipitated proteins are pelleted by centrifugation at 3600 rpm at room temperature for 4 minutes. The supernatant fraction, enriched with saponins, was hydrolyzed with alkaline treatment (e.g., pH 12.5) at high temperature (e.g., 95°C). The supernatant enriched with saponins was then neutralized to a pH of 7.

### Example 8. Overview of coating a food product with the coating composition.

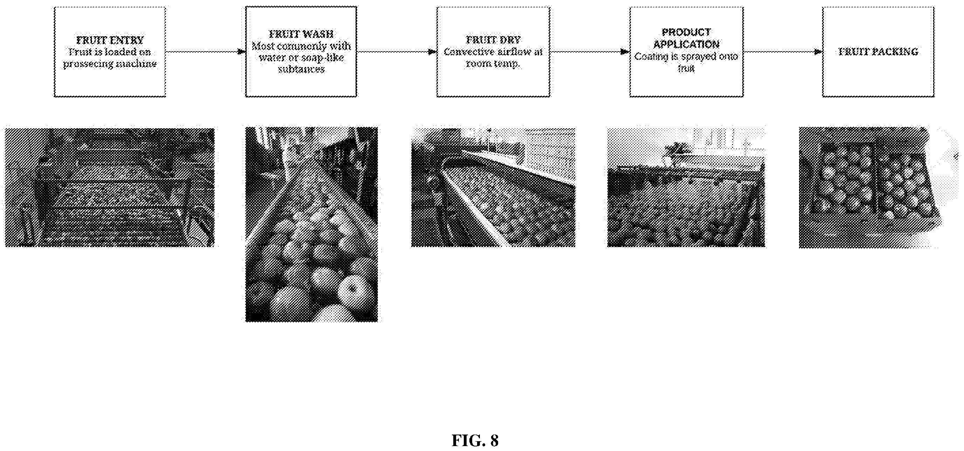

The following description provides an exemplary overview of the method of coating a food product, such as a fruit, with the coating composition. As shown in Figure 8, the fruit was loaded into an industrial food processing machine. The fruit was washed with water and dried with air at room temperature. The coating composition was sprayed onto the fruit and the fruit was packaged for transportation. In some embodiments, the coating composition may be subjected to conditions that promote drying following spraying of the composition onto the fruits. Notably, coating the fruits with the coating composition does not require special equipment and the coating process can be performed using standard process-line equipment. This enables washing, drying, coating, and packaging of fruits to be performed in succession.

### Example 9. Pretreatment of organosolv lignin.

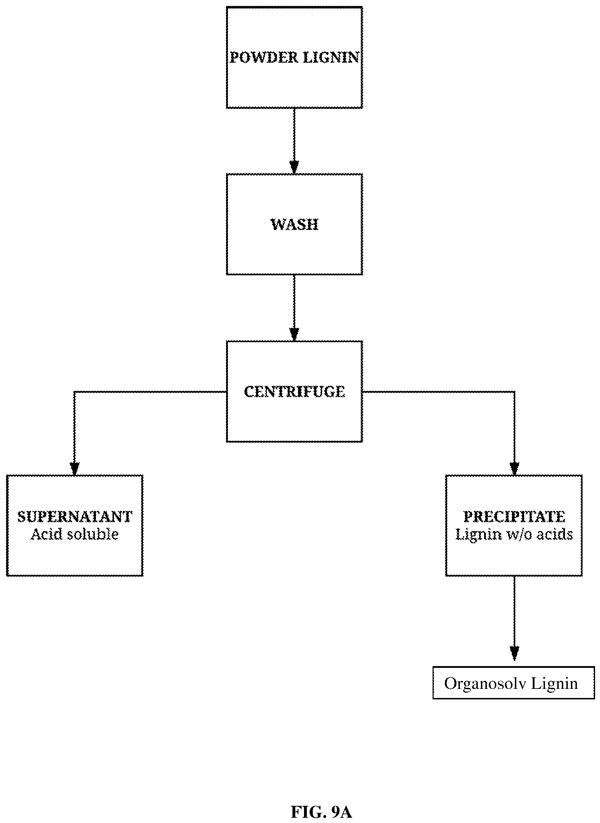

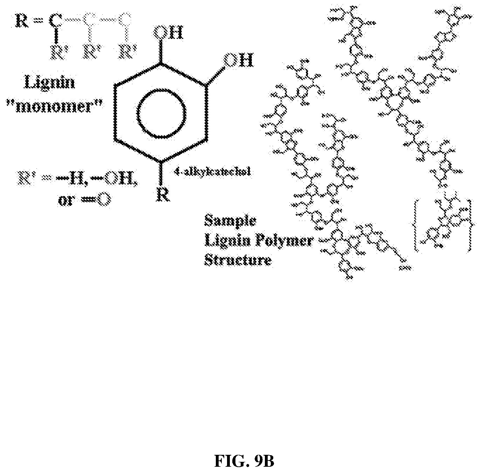

Pretreatment of lignin is performed to remove traces of acid. As shown in Figure 9A, powdered lignin is obtained in an acetic medium washed with water and centrifuged. The centrifugation step separated the acid in the supernatant from the lignin in the precipitate. An exemplary structure of the lignin is show in Figure 9B.

While several embodiments of the present invention have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present invention. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used. Those skilled in the art will recognize, or be able to ascertain using no more than routine experimentation, many equivalents to the specific embodiments of the invention described herein. It is, therefore, to be understood that the foregoing embodiments are presented by way of example only and that, within the scope of the appended claims and equivalents thereto, the invention may be practiced otherwise than as specifically described and claimed. The present invention is directed to each individual feature, system, article, material, and/or method described herein. In addition, any combination of two or more such features, systems, articles, materials, and/or methods, if such features, systems, articles, materials, and/or methods are not mutually inconsistent, is included within the scope of the present invention.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, e.g., elements that are conjunctively present in some cases and disjunctively present in other cases. Other elements may optionally be present other than the elements specifically identified by the "and/or" clause, whether related or unrelated to those elements specifically identified unless clearly indicated to the contrary. Thus, as a non-limiting example, a reference to "A and/or B," when used in conjunction with open-ended language such as "comprising" can refer, in one embodiment, to A without B (optionally including elements other than B); in another embodiment, to B without A (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, e.g., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (e.g. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," and the like are to be understood to be open-ended, *e.g.,* to mean including but not limited to. Only the transitional phrases "consisting of' and "consisting essentially of' shall be closed or semi-closed transitional phrases, respectively, as set forth in the United States Patent Office Manual of Patent Examining Procedures, Section 2111.03.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

The following numbered clauses, describing aspects of the invention, are part of the description.
1. A coating composition, comprising:
   (a) pectin;
   (b) one or more constituents of a vegetable lipid;
   (c) lignin; and,
   (d) saponin.
2. The composition of clause 1 further comprising at least one component selected from the group consisting of:
   (i) nanocellulose;
   (ii) nano-ligno-cellulose;
   (iii) vegetable protein; or
   (iv) natural fruit extract.
3. The composition of clause 1 or clause 2 further comprising at least one fungicide.
4. The composition of clause 3, wherein the fungicide is fludioxonil.
5. The composition of clause 1, wherein the pectin is present at a concentration between about 0.01% to 10% w/v.
6. The composition of clause 5, wherein the pectin is extracted from fruit peels.
7. The composition of clause 1, wherein the one or more constituents of a vegetable lipid is present at a concentration between about 0.01% to 10.0% w/v.
8. The composition of clause 7, wherein the one or more constituents of a vegetable lipid is carnauba wax.
9. The composition of clause 1, wherein the lignin is present at a concentration between about 0.01% to 3% w/v.
10. The composition of clause 9, wherein the lignin is extracted from wheat straw.
11. The composition of clause 10, wherein the lignin is acid extracted.
12. The composition of clause 1, wherein the saponin is present at a concentration between about 0.01% to 10.0% w/v.
13. The composition of clause 12, wherein the saponin is extracted from quinoa.
14. The composition of clause 2, wherein the nanocellulose is present at a concentration between about 0.01% to 3% w/v.
15. The composition of clause 2, wherein the nano-ligno-cellulose is present at a concentration between about 0.01% to 3% w/v.
16. The composition of clause 2, wherein the vegetable protein is present at a concentration between about 0.01% to 3% w/v.
17. The composition of clause 2, wherein the natural fruit extract is present at a concentration between about 0.01% to 1% w/v.
18. A method of producing a coating composition according to clause 1, comprising:
   (a) homogenizing one or more constituents of a vegetable lipid, a lignin, and a saponin with high temperature and high pressure to form a homogenized mixture; and
   (b) dispersing pectin into the homogenized mixture having low temperature to form the coating composition.
19. The method of 18 further comprising homogenizing nano-lingo-cellulose.
20. The method of clause 18 or clause 19 further comprising dispersing at least one or more components selected from nanocellulose, vegetable protein, or natural fruit extract.
21. The method of clauses 18 to 20 further comprising homogenizing the coating composition for with low temperature and low pressure.
22. The method of clause 18 to 21, wherein high temperature is 70-100°C.
23. The method of clauses 18 to 21, wherein low temperature is below 50°C.
24. The method of clauses 18 to 21, wherein high pressure is between about 400 to 1300 bar.
25. The method of clauses 18 to 21, wherein low pressure is between about 10 to 200 bar.
26. A method for preserving a food product comprising coating the food product with an effective amount of the coating composition of clause 1 to preserve the food product.
27. The method of clause 26, wherein coating the food product comprises spraying the composition of clause 1 onto the food product.
28. The method of clause 26, wherein coating the food product comprises electro-sprayed of the composition of clause 1 onto the fruit.
29 The method of clause 26, wherein the food product is a fruit.
30. A method for preserving a plant or component thereof, the method comprising applying the coating composition of clause 1 to the outer surface of the plant or component thereof in an effective amount to preserve the plant or component thereof.
31. The method of clause 30, wherein the plant or component thereof comprises a flower and its stem.
32. The method of clause 31, wherein the flower and its stem have been separated from the plant prior to applying the coating.
33. The method of clause 30, wherein the plant or component thereof comprises a fruit.
34. The method of clause 31, wherein the fruit has been separated from the plant prior to applying the coating.
35. A composition comprising a surface coated with the coating composition of clause 1.
36. The composition of clause 35, wherein the surface comprises the surface of a fruit.
37. A method for transporting a food product over a period of time from a first location to a second location, comprising;
   transporting a food product coated with the coating composition of clause 1 over a period of time from a first location to a second location, wherein the coating composition of clause 1 preserves the food product over the period of time.
38. The method of clause 37, wherein the period of time is between about 1 to 60 days.
39. The method of clause 37, wherein the food product is a fruit.
40. A method for preserving a food product, comprising:
   (a) evaluating surface hydrophobicity of a food product;
   (b) selecting a coating composition for preserving a food product based on (a); and
   (c) coating the food product with the coating composition.
41. The method of clause 40, wherein the food product is a fruit.
42. A device configured for deposting the coating composition of any one of clauses 1 to 17 onto a surface.
43. The device of clause 42, wherein the device is configured to electrospray the composition onto the surface.

## Claims

1. A coating composition, for use in coating a food product, comprising:
(a) a polysaccharide;
(b) one or more constituents of a vegetable lipid; and
(c) at least one surfactant, optionally wherein the surfactant is derived from a natural extract, optionally a plant extract.

2. The composition of claim 1, further comprising at least one component selected from the group consisting of:
(d) nano-ligno-cellulose, optionally wherein the nano-ligno-cellulose is present at a concentration between about 0.01% to about 3% w/v;
(e) vegetable protein, optionally wherein the vegetable protein is present at a concentration between about 0.01% to about 3% w/v; or
(f) natural fruit extract, optionally wherein the natural fruit extract is present at a concentration between about 0.01% to about 1% w/v.

3. The composition of any one of claims 1-2, wherein the polysaccharide is a 1,4 linked glucose polysaccharide or a seaweed polysaccharide, and optionally wherein the polysaccharide is extracted from plants or algae.

4. The composition of any one of claims 1-3, wherein the polysaccharide is a nanocellulose, optionally wherein the nanocellulose is extracted from: wood pulp, plants, or algae; and optionally wherein the nanocellulose is present at a concentration between about 0.01% to about 3% w/v.

5. The composition of any one of claims 1-4, 7, or 9, wherein the polysaccharide is:
a) a beta-1,4 linked glucose polysaccharide (β-1,4 linked glucose polysaccharide); or
b) a seaweed polysaccharide, optionally wherein the seaweed polysaccharide is extracted from a red edible seaweed, and optionally wherein the polysaccharide is pectin.

6. The composition of claim 5, wherein the pectin is present at a concentration between about 0.01% to about 10% weight to volume (w/v), and optionally wherein the pectin is extracted from fruit peels.

7. The composition of any one of claims 1-6, wherein the composition further comprises an active ingredient, optionally wherein the active ingredient comprises an antimicrobial, optionally wherein the active ingredient comprises an organic acid, and optionally wherein the active ingredient comprises citric acid.

8. The composition of any one of claims 1-7, further comprising at least one fungicide, optionally wherein the fungicide is fludioxonil.

9. The composition of any one of claims 1-8, wherein the one or more constituents of a vegetable lipid is present at a concentration between about 0.01% to about 10% w/v, and optionally wherein the one or more constituents of a vegetable lipid is carnauba wax.

10. The composition of any one of claims 1-9, wherein the surfactant is present at a concentration between about 0.01% to about 10% w/v, wherein the surfactant is a saponin, and optionally wherein the saponin is extracted from quinoa.

11. A method of producing a coating composition according to any one of claims 1-10, comprising:
(a) homogenizing in water one or more constituents of a vegetable lipid and a surfactant with high temperature and high pressure to form a homogenized mixture; and
(b) dissolving a polysaccharide into the homogenized mixture having low temperature to form the coating composition; and optionally further comprising one or more of:
(c) homogenizing nano-ligno-cellulose;
(d) dispersing at least one or more components selected from nano-ligno-cellulose, vegetable protein, or natural fruit extract; and
(e) dispersing the coating composition with low temperature and low pressure, optionally wherein:
(1) high temperature is about 70 degrees Celsius (°C) to about 100°C;
(2) high pressure is between about 400 to about 1300 bar; and/or
(3) low pressure is between about 10 to about 200 bar.

12. A method for preserving a food product comprising coating the food product with an effective amount of the coating composition of any one of claims 1-10 to preserve the food product, optionally wherein coating the food product comprises spraying the composition onto the food product, optionally wherein coating the food product comprises electro-spraying the composition onto the food product, and optionally wherein the food product is a fruit.

13. A composition comprising a surface coated with the coating composition of any of claims 1-10, optionally wherein the surface comprises the surface of:
(a) a plant; or
(b) a fruit.

14. A method for transporting a food product over a period of time from a first location to a second location, comprising;
transporting a food product coated with the coating composition of any one of claims 1-10 over a period of time from a first location to a second location, wherein the coating composition preserves the food product over the period of time, optionally wherein the period of time is between about 1 to about 60 days, and optionally wherein the food product is a fruit.

15. A device, housing the coating composition of any one of claims 1-10, configured for dispersing the coating composition, optionally wherein the device is configured to electrospray the composition onto the surface.
